# EUROPÄISCHE PATENTSCHRIFT

(11) **EP 3 119 650 B1**
(45) Veröffentlichungstag und Bekanntmachung des Hinweises auf die Patenterteilung: **16.05.2018**
(21) Anmeldenummer: 15708817.0
(22) Anmeldetag: 09.03.2015
(51) Int. Cl.: B60T 15/02, B60T 17/22

(54) **DRUCKLUFTBREMSANORDNUNG FÜR EIN SCHIENENFAHRZEUG**
COMPRESSED-AIR BRAKE ASSEMBLY FOR A RAIL VEHICLE
SYSTÈME DE FREIN PNEUMATIQUE POUR VÉHICULE FERROVIAIRE

(30) Priorität: 20.03.2014 DE 102014103840
(43) Veröffentlichungstag der Anmeldung: 25.01.2017
(73) Patentinhaber: KNORR-BREMSE Systeme für Schienenfahrzeuge GmbH, 80809 München (DE)
(72) Erfinder: HELLER, Martin, 85716 Unterschleißheim (DE); ANTON, Thomas, 85614 Kirchseeon (DE); WACH, Jörg-Johannes, 81247 München (DE); HOLZ, Michael, 85757 Karlsfeld (DE); CORDES, Matthias, 85354 Freising (DE)
(86) Internationale Anmeldenummer: PCT/EP2015/054799
(87) Internationale Veröffentlichungsnummer: WO 2015/139978

(56) Entgegenhaltungen:
- WO-A1-2010/058458
- DE-A1-102010 005 091
- DE-A1-102012 009 427
- US-A1- 2006 048 566

## Beschreibung

### GEBIET DER ERFINDUNG

Die Erfindung betrifft eine Druckluftbremsanordnung für ein Schienenfahrzeug, umfassend mindestens einen Bremszylinder zur Erzeugung einer Anpresskraft für eine Reibungsbremse, wobei mindestens ein Steuerventil nach Maßgabe eines Druckes in einer Hauptluftleitung einen entsprechenden Bremszylinderdruck bildet, der über eine zwischen dem mindestens einen Steuerventil und dem mindestens einen Bremszylinder angeordnete Leitung an den mindestens einen Bremszylinder geleitet wird, wobei das mindestens eine Steuerventil mit mindestens einem Druckluftsensor zusammenwirkt, wobei ferner ein Vorratsluftbehälter über das mindestens eine Steuerventil ansteuerbar ist und die Vorratsluft für den mindestens einen Bremszylinder speichert.

Die Erfindung erstreckt sich vornehmlich auf Druckluftbremsanordnungen mit mindestens einem Steuerventil für mindestens eine indirekt wirkende Druckluftbremse von einem Schienenfahrzeug.

### HINTERGRUND DER ERFINDUNG

Aus der Druckschrift DE 10 2007 024 310 A1 geht eine Vorrichtung und ein Verfahren zur Beurteilung der Kompabilität von Bremsanlagen einer Fahrzeugkombination aus einem Zugfahrzeug und einem Anhängefahrzeug hervor. Dabei werden eine aufgebrachte Bremsenergie eines Bremsvorgangs des Anhängefahrzeugs und eine benötigte Bremsenergie des Bremsvogangs des Anhängefahrzeugs ermittelt. Ein Sicherheitsventil verfügt über einen Behälteranschluss, an dem der Vorratsdruckbehälter für das Anhängefahrzeug angeschlossen ist und über einen Bremsdruckanschluss, an dem der pneumatische Bremsdruck an den pneumatischen Eingang eines pneumatischen Bremsdruckmodulators ausgegeben wird. Dieser Bremsdruck stellt für das Anhängefahrzeug mit seiner elektronischen Bremsdruckregelung den pneumatischen Steuerdruck dar. Gemäß einer Weiterbildung werden die aufgebrachte Bremsenergie und die benötigte Bremsenergie in einem in der Fahrzeugkombination vorhandenen Steuergerät gespeichert und die aufgebrachte Bremsenergie und die benötigte Bremsenergie können über eine Schnittstelle ausgelesen werden. Das Steuergerät verwendet für die Bremsdruckregelung des Druckmesswerts eines Drucksensors, der den am Bremsdruckanschluss ausgegebenen Bremsdruck des Sicherheitsventils darstellt. Das elektrische Bremssteuersystem weist eine Elektronik zur Auswertung der Sensorsignale sowie zur Ansteuerung der pneumatischen Ventilen auf, die ebenfalls Bestandteil des Steuersystems sind. Die Ventile des Bremssteuersystems sind über pneumatische Leitungen mit den Bremszylindern verbunden.

Des Weiteren geht aus der DE 602 23 291 T2 eine Hydraulikbremsdrucksteuereinheit hervor. Diese weist eine Mehrzahl von elektromagnetisch betriebenen Hydraulikdrucksteuerventilen auf, die in der Lage sind, einen Druck des Arbeitsfluids in vier Bremszylindern zu steuern. Ferner umfasst die Hydraulikbremsdrucksteuereinheit auch einen Hauptzylinder, der durch einen Bediener betätigbar ist, um das Arbeitsfluid unter Druck zu setzen, einen Hauptzylinderdrucksensor, der betriebsfähig ist, einen Druck des durch den Hauptzylinder unter Druck gesetzten Arbeitsfluids zu erfassen und einen Druckspeicherdrucksensor, der betriebsfähig ist, einen durch das in dem Druckspeicher gespeicherten Arbeitsfluids zu erfassen.

Steuerventile sind pneumatische Geräte, die den Druck in den Bremszylindern nach Maßgabe des Druckes in einer Hauptluftleitung steuern oder regeln. Bei indirekt wirkenden Druckluftbremsen sind die Bremszylinder entlüftet, wenn die Hauptluftleitung auf ihren Regelbetriebsdruck aufgefüllt ist. Ausgelöst durch die Absenkung des Druckes in der Hauptluftleitung und abhängig von der Höhe der Absenkung wird ein Bremszylinderdruck bis zu einem Maximalwert erzeugt. Hierzu wird Druckluft aus einem Vorratsluftbehälter verwendet.

Der Betrieb der Steuerventile ist kritisch für die Verkehrssicherheit und unterliegt deshalb einer strengen Überwachung. Mithin werden die Bremsen des Schienenfahrzeugs regelmäßig geprüft. Dabei wird eine Bremsung eingeleitet und geprüft, ob die Bremsklötze oder Bremsbelege anliegen und nach Anhebung des Druckes wieder lösen. Aus dem allgemein bekannten Stand der Technik geht dafür die Verwendung von Bremsprüfgeräten hervor. Solche Bremsprüfgeräte können über Druckluftkupplungen angeschlossen werden. Darüber hinaus werden Steuerventile aus Sicherheitsgründen einer planmäßigen Wartung unterworfen. Dabei werden sie nach Ablauf eines Zeitintervalls oder einer Laufleistung des Schienenfahrzeuges vom Schienenfahrzeug abgebaut und der Wartung unterzogen.

Der Nachteil des zuvor genannten Standes der Technik besteht insbesondere darin, dass die Prüfung einer Druckluftbremsanordnung, insbesondere der Steuerventile, mit erheblichem Aufwand verbunden ist. Ferner liefert die Wartung nur eine Information über den augenblicklichen Zustand der Steuerventile. Darüber hinaus kann die Prüfung der Steuerventile aufgrund der vorgegebenen Intervalle zu spät oder zu früh erfolgen, wodurch einerseits Risiken, andererseits unnötige Aufwendungen verursacht werden.

### OFFENBARUNG DER ERFINDUNG

Es ist daher die Aufgabe der vorliegenden Erfindung eine Druckluftbremsanordnung zu schaffen, die die zuvor genannten Nachteile behebt und einen sicheren Betrieb der Druckluftbremsanordnung, insbesondere des mindestens einen Steuerventils, bei minimaler Aufwendung für die Wartung und Instandhaltung gewährleistet.

Die Aufgabe wird ausgehend von einer Druckluftbremsanordnung gemäß dem Oberbegriff von Anspruch 1 und 2 in Verbindung mit deren kennzeichnenden Merkmalen gelöst. Vorteilhafte Weiterbildungen der Erfindung gehen aus den nachfolgenden abhängigen Ansprüchen hervor.

Erfindungsgemäß ist der mindestens eine Druckluftsensor an das mindestens eine Steuerventil angeordnet oder an der zwischen dem mindestens einen Steuerventil und dem mindestens einem Bremszylinder ausgebildeten Leitung angeordnet. Dabei ist der mindestens eine Druckluftsensor einerseits zur Energieversorgung mit einer Energiequelle und andererseits zur Datenspeicherung mit einem eine Schnittstelle zur Datenauslesung aufweisenden Datenspeicher verbunden, wobei die auf den Datenspeicher abgespeicherten Daten mindestens eine Information über ein Druckniveau in den mindestens einen Druckzylinder aufweisen. Mit anderen Worten kann der mindestens eine Druckluftsensor zusammen mit der Energiequelle und dem Datenspeicher mit Schnittstelle sowohl in dem Gehäuse des Steuerventils integriert sein als auch von außen an dem Gehäuse des Steuerventils angeordnet sein. Bei einer Anordnung des Druckluftsensors mit Energiequelle, Datenspeicher und Schnittstelle an der zwischen Steuerventil und dem mindestens einen Bremszylinder ausgebildeten Leitung ist, insbesondere ein Verbindungskanal zwischen der Leitung und dem mindestens einen Druckluftsensor vorgesehen. Aus der mindestens einen Information über den Druck in dem mindestens einen Bremszylinder geht hervor, wie oft der Bremszylinderdruck bestimmte Werte eingenommen hat.

Vorzugsweise sind die abgespeicherten Daten über die Schnittstelle von einer elektronischen Lese- und Auswerteeinheit auslesbar, die über eine Software zur Auswertung der Daten verfügt. Die abgespeicherten Daten können regelmäßig oder bei Bedarf ausgelesen werden. Die Software enthält insbesondere Informationen über das bestimmungsgemäße und über das normale Verhalten des mindestens einen Steuerventils. Bestimmungsgemäß soll der maximale Bremszylinderdruck in einem bestimmten Intervall vorliegen. Dabei beträgt der Nennwert 3,8bar und die Toleranz +/- 0,1bar. In der Regel hat der Bremszylinderdruck während ausgedehnter Phasen der Fahrt des Schienenfahrzeugs den Wert 0. Der Bremszylinderdruck des mit Vollbremsung abgestellten Fahrzeugs bleibt für eine bestimmte Zeit, die von der Dichtheit des Systems bestimmt wird, erhalten. Es können so Informationen gewonnen werden, ob das mindestens eine Steuerventil bestimmungsgemäß arbeitet, wie häufig es seit der letzten Überholung in Aktion war und wie der Zustand im Vergleich zu einem Normalzustand einer statistisch relevanten Menge zu beurteilen ist. So können Steuerventile gefunden werden, bei denen ihre eigene oder die Dichtheit der benachbarten Elemente des Bremssystems oder andere Parameter bereits in Richtung eines Ausfallkriteriums tendieren. Ebenso können auch Steuerventile gefunden werden die flüchtige Fehler aufweisen, bereits etwas schwergängig sind oder eine hohe Anzahl von Brems- und Lösezyklen absolviert haben, so dass sie in Kürze überholt werden sollten.

Des Weiteren bevorzugt umfassen die abgespeicherten Daten eine Vielzahl von Brems- und Lösezyklen des mindestens einen Bremszylinders. Die ermittelten Brems- und Lösezyklen dienen dazu, Informationen über den Zustand des mindestens einen Steuerventils und anderen Komponenten der Druckluftbremsanordnung zu ermitteln und diese zu signalisieren.

Besonders bevorzugt umfasst die Schnittstelle einen Transponder, der mit der elektronischen Lese- und Auswerteeinheit zur kabellosen Übertragung der abgespeicherten Daten über elektromagnetische Wellen verbunden ist. Vorteilhafterweise ist die elektronische Lese- und Auswerteeinheit nicht an dem Schienenfahrzeug angeordnet, so dass eine Datenübertragung zur Lese- und Auswerteinheit ohne feste Verbindung realisierbar ist. Vorzugsweise ist der Transponder als RFID-Transponder ausgebildet.

Gemäß einer bevorzugten Ausführungsform ist die elektronische Lese- und Auswerteeinheit direkt an der Schnittstelle zur Auswertung der Daten und Anzeige von drei unterschiedlichen Zuständen angeordnet. Insbesondere werden die Zustände "in Ordnung", "Achtung" oder "Handlungsbedarf" diagnostiziert und bereitgestellt. Dadurch kann in Vorbeifahrt des Schienenfahrzeugs das Signal erfasst werden und bei Bedarf Handlungen des Bahnbetriebes ausgelöst werden.

Vorzugsweise ist mindestens ein zweiter Druckluftsensor zum Bestimmen des Drucks in der Hauptluftleitung angeordnet. Der zweite Druckluftsensor ist ebenfalls wie der erste Druckluftsensor mit der Energiequelle und dem Datenspeicher verbunden. Dadurch kann insbesondere ein Soll/Ist-Vergleich des Zusammenhangs zwischen dem Druck in der Hauptluftleitung und dem Druck im Bremszylinder von der Lese- und Auswerteeinheit durchgeführt werden, wodurch sich der Zustand des Steuerventils noch genauer diagnostizieren lässt.

Gemäß einer bevorzugten Ausführungsform umfasst die Energiequelle eine Mikroturbine, die bei einem Druckwechsel die strömende Luft zur Energieerzeugung für den mindestens einen Druckluftsensor und eine Datenspeicherung verwendet. Mit anderen Worten wird die Mikroturbine der Energiequelle von der strömenden Luft angetrieben und erzeugt die notwendige Energie für den mindestens einen Druckluftsensor und den Datenspeicher, so dass die durch den Druckluftsensor generierten Informationen auf den Datenspeicher abgespeichert werden können. Dadurch kann sowohl Energie eingespart werden als auch auf einen Energiespeicher verzichtet werden.

Gemäß einer weiteren bevorzugten Ausführungsform umfasst die Energiequelle einen Druck-Elektrizitäts-Wandler, der mindestens eine Fläche aufweist, auf die eine Druckänderung zur Energieerzeugung einwirkt. Vorzugsweise ist es auch denkbar dass die Energiequelle einen Energiespeicher umfasst. Eine Kombination aus Energieerzeuger und Energiespeicher ist ebenfalls denkbar.

### KURZE BESCHREIBUNG DER ZEICHNUNGEN

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigen:
- Fig.1: einen Blockdarstellung der erfindungsgemäßen Druckluftbremsanordnung nach einem ersten Ausführungsbeispiel, und
- Fig.2: einen Blockdarstellung der erfindungsgemäßen Druckluftbremsanordnung nach einem zweiten Ausführungsbeispiel.

### DETAILLIERTE BESCHREIBUNG EINER BEVORZUGTEN AUSFÜHRUNGSFORM

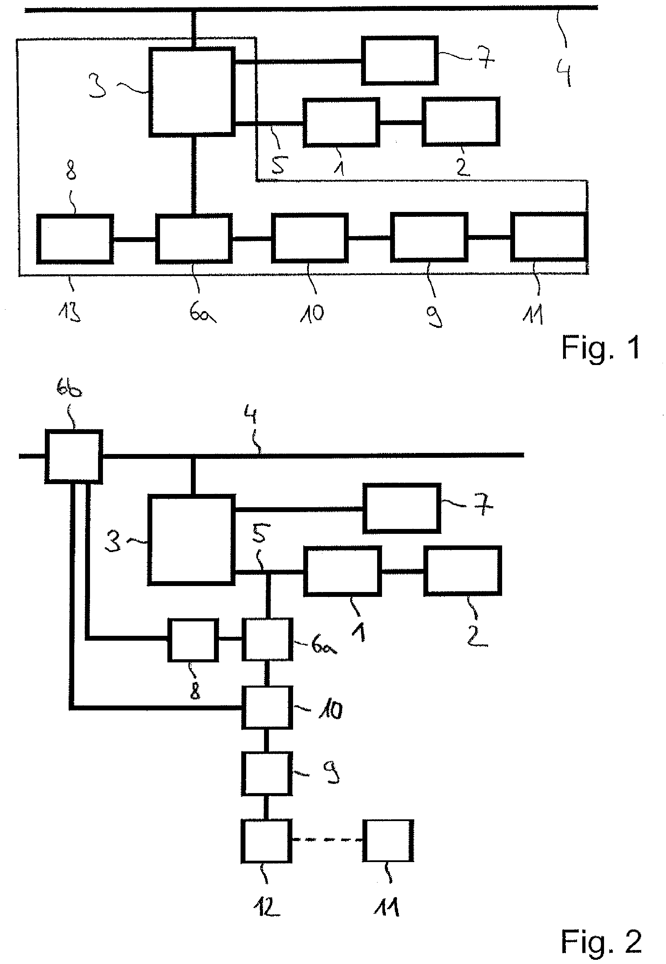

Nach Figur 1 umfasst die Druckluftbremsanordnung für ein Schienenfahrzeug einen Bremszylinder 1 zur Erzeugung einer Anpresskraft für eine Reibungsbremse 2, wobei ein Steuerventil 3 nach Maßgabe eines Druckes in einer Hauptluftleitung 4 einen entsprechenden Bremszylinderdruck bildet. Ferner ist ein Vorratsluftbehälter 7 mit dem Steuerventil 3 verbunden und darüber auch ansteuerbar. Der Vorratsluftbehälter 7 speichert die Vorratsluft für den Bremszylinder 1. In einem gemeinsamen Gehäuse 13 sind zusammen mit dem Steuerventil 3 ein Druckluftsensor 6a sowie eine Energiequelle 8, ein Datenspeicher 10 mit einer Schnittstelle 9 und eine elektronische Lese- und Auswerteeinheit 11 angeordnet. Mit anderen Worten sind die zuvor genannten Teile als Einheit in einem gemeinsamen Gehäuse 13 mit dem Steuerventil 3 angeordnet.

Die Energiequelle 8 weist eine - hier nicht dargestellte - Mikroturbine auf, die bei einem Druckwechsel die strömende Luft zur Energieerzeugung für den Druckluftsensor 6a und dem Datenspeicher 10 nutzt, ohne zusätzlich Luft zu verbrauchen. Der Druckluftsensor 6a speichert die generierten Informationen über das Druckniveau im Bremszylinder 1 auf den Datenspeicher 10 ab. Diese abgespeicherten Daten sind über die Schnittstelle 9 von der elektronischen Lese- und Auswerteeinheit 11 auslesbar. Die Lese- und Auswerteeinheit 11 verfügt über eine Software zur Auswertung der Daten und Anzeige von drei unterschiedlichen Zuständen, nämlich "in Ordnung", "Achtung" oder "Handlungsbedarf". Ferner umfassen die abgespeicherten Daten eine Vielzahl von Brems- und Lösezyklen des Bremszylinders 1.

Gemäß Figur 2 weist die Druckluftbremsanordnung einen ersten Zylinder 6a, der an einer zwischen dem Steuerventil 3 und dem Bremszylinder 1 angeordneten Leitung 5 ausgebildet ist. Des Weiteren ist ein zweiter Druckluftsensor 6b zum Bestimmen des Drucks in der Hauptluftleitung 4 angeordnet. Die Energiequelle 8 versorgt sowohl den ersten Druckluftsensor 6a als auch den zweiten Druckluftsensor 6b mit elektrischer Energie. Darüber hinaus stellt die Energiequelle 8 auch die nötige elektrische Energie zur Datenspeicherung bereit. Ferner umfasst die Energiequelle 8 einen - hier nicht dargestellten - Druck-Elektrizitäts-Wandler, der eine Fläche aufweist, auf die eine Druckänderung zur Energieerzeugung einwirkt. Die beiden Druckluftsensoren 6a und 6b sind mit dem Datenspeicher 10 zur Abspeicherung der durch die Druckluftsensoren 6a und 6b generierten Informationen verbunden. Ferner weist der Datenspeicher 10 eine Schnittstelle 9 auf, an die ein Transponder 12 angeordnet ist. Dieser ist über elektromagnetische Welle mit der elektronischen Lese- und Auswerteeinheit 11 kabellos verbunden. Die von dem Transponder 12 übermittelten Informationen werden von der Lese- und Auswerteeinheit 11 ausgewertet.

### Bezugszeichenliste

- 1: Bremszylinder
- 2: Reibungsbremse
- 3: Steuerventil
- 4: Hauptluftleitung
- 5: Leitung
- 6a, 6b: Druckluftsensor
- 7: Vorratsluftbehälter
- 8: Energiequelle
- 9: Schnittstelle
- 10: Datenspeicher
- 11: Lese- und Auswerteeinheit
- 12: Transponder
- 13: Gehäuse

## Patentansprüche

1. Druckluftbremsanordnung für ein Schienenfahrzeug, umfassend mindestens einen Bremszylinder (1) zur Erzeugung einer Anpresskraft für eine Reibungsbremse (2), wobei mindestens ein Steuerventil (3) nach Maßgabe eines Druckes in einer Hauptluftleitung (4) einen entsprechenden Bremszylinderdruck bildet, der über eine zwischen dem mindestens einen Steuerventil (3) und dem mindestens einen Bremszylinder (1) angeordnete Leitung (5) an den mindestens einen Bremszylinder (1) geleitet wird, wobei das mindestens eine Steuerventil (3) mit mindestens einem Druckluftsensor (6a) zusammenwirkt, wobei ferner ein Vorratsluftbehälter (7) über das mindestens eine Steuerventil (3) ansteuerbar ist und die Vorratsluft für den mindestens einen Bremszylinder (1) speichert,
**dadurch gekennzeichnet, dass** der mindestens eine Druckluftsensor (6a) an das mindestens eine Steuerventil (3) angeordnet ist, und einerseits zur Energieversorgung mit einer Energiequelle (8) aber andererseits zur Datenspeicherung mit einem eine Schnittstelle (9) zur Datenauslesung aufweisenden Datenspeicher (10) verbunden ist, wobei die auf dem Datenspeicher (10) abgespeicherten Daten mindestens eine Information über ein Druckniveau in dem mindestens einen Bremszylinder (1) enthalten.

2. Druckluftbremsanordnung für ein Schienenfahrzeug, umfassend mindestens einen Bremszylinder (1) zur Erzeugung einer Anpresskraft für eine Reibungsbremse (2), wobei mindestens ein Steuerventil (3) nach Maßgabe eines Druckes in einer Hauptluftleitung (4) einen entsprechenden Bremszylinderdruck bildet, der über eine zwischen dem mindestens einen Steuerventil (3) und dem mindestens einen Bremszylinder (1) angeordnete Leitung (5) an den mindestens einen Bremszylinder (1) geleitet wird, wobei das mindestens eine Steuerventil (3) mit mindestens einem Druckluftsensor (6a) zusammenwirkt, wobei ferner ein Vorratsluftbehälter (7) über das mindestens eine Steuerventil (3) ansteuerbar ist und die Vorratsluft für den mindestens einen Bremszylinder (1) speichert,
**dadurch gekennzeichnet, dass** der mindestens eine Druckluftsensor (6a) an der zwischen dem mindestens einen Steuerventil (3) und dem mindestens einen Bremszylinder (1) angeordneten Leitung (5) angeordnet ist, und einerseits zur Energieversorgung mit einer Energiequelle (8) aber andererseits zur Datenspeicherung mit einem eine Schnittstelle (9) zur Datenauslesung aufweisenden Datenspeicher (10) verbunden ist, wobei die auf dem Datenspeicher (10) abgespeicherten Daten mindestens eine Information über ein Druckniveau in dem mindestens einen Bremszylinder (1) enthalten.

3. Druckluftbremsanordnung nach Anspruch 1 oder 2,
**dadurch gekennzeichnet, dass** die abgespeicherten Daten über die Schnittstelle (9) von einer elektronischen Lese- und Auswerteinheit (11) auslesbar sind, die über eine Software zur Auswertung der Daten verfügt.

4. Druckluftbremsanordnung nach Anspruch 1 oder 2,
**dadurch gekennzeichnet, dass** die abgespeicherten Daten eine Vielzahl von Brems- und Lösezyklen des mindestens einen Bremszylinders (1) umfassen.

5. Druckluftbremsanordnung nach einem der vorhergehenden Ansprüche,
**dadurch gekennzeichnet, dass** die Schnittstelle (9) einen Transponder (12) umfasst, der mit der elektronischen Lese- und Auswerteinheit (11) zur kabellosen Übertragung der abgespeicherten Daten über elektromagnetische Wellen verbunden ist.

6. Druckluftbremsanordnung nach Anspruch 3,
**dadurch gekennzeichnet, dass** die elektronische Lese- und Auswerteinheit (11) direkt an der Schnittstelle (9) zur Auswertung der Daten und Anzeige von drei unterschiedlichen Zuständen angeordnet ist.

7. Druckluftbremsanordnung nach Anspruch 1 oder 2,
**dadurch gekennzeichnet, dass** mindestens ein zweiter Druckluftsensor (6b) zum Bestimmen des Drucks in der Hauptluftleitung (4) angeordnet ist.

8. Druckluftbremsanordnung nach Anspruch 1 oder 2,
**dadurch gekennzeichnet, dass** die Energiequelle (8) eine Mikroturbine umfasst, die bei einem Druckwechsel die strömende Luft zur Energieerzeugung für den mindestens einen Druckluftsensor (6a) und eine Datenspeicherung verwendet.

9. Druckluftbremsanordnung nach Anspruch 1 oder 2,
**dadurch gekennzeichnet, dass** die Energiequelle (8) einen Druck-Elektrizitäts-Wandler umfasst, der mindestens eine Fläche aufweist, auf die eine Druckänderung zur Energieerzeugung einwirkt.

10. Druckluftbremsanordnung nach Anspruch 1 oder 2,
**dadurch gekennzeichnet, dass** die Energiequelle (8) einen Energiespeicher umfasst.

## Claims

1. Compressed-air brake assembly for a rail vehicle, comprising at least one brake cylinder (1) for generating a pressing force for a friction brake (2), wherein at least one control valve (3) forms a corresponding brake-cylinder pressure in accordance with a pressure in a main air line (4), which brake-cylinder pressure is conducted to the at least one brake cylinder (1) via a line (5) arranged between the at least one control valve (3) and the at least one brake cylinder (1), wherein the at least one control valve (3) interacts with at least one compressed-air sensor (6a), wherein in addition a supply air vessel (7) can be actuated by means of the at least one control valve (3), and stores the supply air for the at least one brake cylinder (1),
**characterised in that** the at least one compressed-air sensor (6a) is arranged on the at least one control valve (3) and is connected, on the one hand, to an energy source (8) for the energy supply but, on the other hand, is connected, for the purpose of data storage, to a data memory (10) having an interface (9) for reading out data, wherein the data stored in the data memory (10) contain at least one item of information about a pressure level in the at least one brake cylinder (1).

2. Compressed-air brake assembly for a rail vehicle, comprising at least one brake cylinder (1) for generating a pressing force for a friction brake (2), wherein at least one control valve (3) forms a corresponding brake cylinder pressure in accordance with a pressure in a main air line (4), which brake cylinder pressure is conducted to the at least one brake cylinder (1) via a line (5) arranged between the at least one control valve (3) and the at least one brake cylinder (1), wherein the at least one control valve (3) interacts with at least one compressed-air sensor (6a), wherein in addition a supply air vessel (7) can be actuated by means of the at least one control valve (3), and stores the supply air for the at least one brake cylinder (1),
**characterised in that** the at least one compressed air sensor (6a) is arranged on the line (5) arranged between the at least one control valve (3) and the at least one brake cylinder (1) and is connected, on the one hand, to an energy source (8) for the energy supply but, on the other hand, is connected, for the purpose of data storage, to a data memory (10) having an interface (9) for reading out data, wherein the data which is stored in the data memory (10) contain at least one item of information about a pressure level in the at least one brake cylinder (1).

3. Compressed-air brake assembly according to claim 1 or 2,
**characterised in that** the stored data can be read out, via the interface (9), by an electronic reading and evaluating unit (11) which has software for evaluating data.

4. Compressed-air brake assembly according to claim 1 or 2,
**characterised in that** the stored data comprise a multiplicity of braking and release cycles of the at least one brake cylinder (1).

5. Compressed-air brake assembly according to any of the preceding claims,
**characterised in that** the interface (9) comprises a transponder (12) which is connected to the electronic reading and evaluating unit (11) for the cableless transmission of the stored data by means of electromagnetic waves.

6. Compressed-air brake assembly according to claim 3,
**characterised in that** the electronic reading and evaluating unit (11) is arranged directly on the interface (9) for evaluating the data and displaying three different states.

7. Compressed-air brake assembly according to claim 1 or 2,
**characterised in that** at least one second compressed air sensor (6b) for determining the pressure is arranged in the main air line (4).

8. Compressed-air brake assembly according to claim 1 or 2,
**characterised in that** the energy source (8) comprises a micro-turbine which, in the event of a change in pressure, uses the flowing air to generate energy for the at least one compressed-air sensor (6a) and a data storage means.

9. Compressed-air brake assembly according to claim 1 or 2,
**characterised in that** the energy source (8) comprises a pressure/electricity transformer which has at least one face on which a change in pressure acts in order to generate energy.

10. Compressed-air brake assembly according to claim 1 or 2,
**characterised in that** the energy source (8) comprises an energy store.

## Revendications

1. Système de frein à air comprimé pour un véhicule ferroviaire, comprenant au moins un cylindre (1) de frein de production d'une pression d'application d'un frein (2) à friction, dans lequel au moins une vanne (3) de commande forme, en fonction d'une pression dans un conduit (4) principal pour de l'air, une pression correspondante de cylindre de frein, qui est envoyée au au moins au cylindre (1) de frein par un conduit (5) disposé entre la au moins une vanne (3) de commande et le au moins un cylindre (1) de frein, la au moins une vanne (3) de commande coopérant avec au moins un capteur (6a) d'air comprimé, dans lequel en outre un récipient (7) d'air de réserve peut être commandé par le au moins une vanne (3) de commande et emmagasine l'air de réserve pour le au moins un cylindre (1) de frein, **caractérisé en ce que** le au moins un capteur (6a) d'air comprimé est monté sur la au moins une vanne (3) de commande et est relié, d'une part, pour l'alimentation en énergie à une source (8) d'énergie, mais d'autre part, pour la mémorisation de données avec une mémoire (10) de données ayant une interface (9) pour la lecteur de données, les données mémorisées dans la mémoire (10) de données contenant au moins une information sur un niveau de pression dans le au moins un cylindre (1) de frein.

2. Agencement de frein à air comprimé pour un véhicule ferroviaire, comprenant au moins un cylindre (1) de frein de production d'une pression d'application d'un frein (2) à friction, dans lequel au moins une vanne (3) de commande forme, en fonction d'une pression dans un conduit (4) principal pour de l'air, une pression correspondante de cylindre de frein, qui est envoyée au au moins au cylindre (1) de frein par un conduit (5) disposé entre la au moins une vanne (3) de commande et le au moins un cylindre (1) de frein, la au moins une vanne (3) de commande coopérant avec au moins un capteur (6a) d'air comprimé, dans lequel en outre un récipient (7) d'air de réserve peut être commandé par le au moins une vanne (3) de commande et emmagasine l'air de réserve pour le au moins un cylindre (1) de frein, **caractérisé en ce que** le au moins un capteur (6a) d'air comprimé est monté sur le conduit (5) disposé entre la au moins une vanne (3) de commande et le au moins un cylindre (1) de frein et est relié, d'une part, pour l'alimentation en énergie à une source (8) d'énergie, mais d'autre part, pour la mémorisation de données à une mémoire (10) de données ayant une interface (9) pour la lecture de données, les données mémorisées dans la mémoire (10) de données contenant au moins une information sur un niveau de pression dans le au moins un cylindre (1) de frein.

3. Système de frein à air comprimé suivant la revendication 1 ou 2,
**caractérisé en ce que** les données mémorisées peuvent être lues par l'intermédiaire de l'interface (9) par une unité (11) électronique de lecture et d'exploitation, qui dispose d'un logiciel d'exploitation de données.

4. Système de frein à air comprimé suivant la revendication 1 ou 2,
**caractérisé en ce que** les données mémorisées comprennent une pluralité de cycles de freinage et de desserrage d'au moins un cylindre (1) de frein.

5. Système de frein à air comprimé suivant l'une des revendications précédentes,
**caractérisé en ce que** l'interface (9) comprend un transpondeur (12), qui est relié à l'unité (11) électronique de lecture et d'exploitation pour la transmission sans câble des mémoires mémorisées par des ondes électromagnétiques.

6. Système de frein à air comprimé suivant la revendication 3,
**caractérisé en ce que** l'unité (11) électronique de lecture et d'exploitation est disposée directement sur l'interface (9) pour l'exploitation de données et l'affichage de trois états différents.

7. Système de frein à air comprimé suivant la revendication 1 ou 2,
**caractérisé en ce qu'**au moins un deuxième capteur (6b) d'air comprimé est monté pour déterminer la pression dans le conduit (4) principal pour de l'air.

8. Système de frein à air comprimé suivant la revendication 1 ou 2,
**caractérisé en ce que** la source (8) d'énergie comprend une microturbine qui utilise, s'il se produit un changement de pression, l'air qui s'écoule pour produire de l'énergie pour le au moins un capteur (6a) d'air comprimé et une mémorisation de données.

9. Système de frein à air comprimé suivant la revendication 1 ou 2,
**caractérisé en ce que** la source (8) d'énergie comprend un transducteur-électricité qui a au moins une surface, sur laquelle une variation de pression agit pour la production d'énergie.

10. Système de frein à air comprimé suivant la revendication 1 ou 2,
**caractérisé en ce que** la source (8) d'énergie comprend un accumulateur d'énergie.
